# EUROPEAN PATENT APPLICATION

(11) **EP 2 811 242 A1**
(43) Date of publication of application: **10.12.2014**
(21) Application number: 14166005.0
(22) Date of filing: 25.04.2014
(51) Int. Cl.: F25B 41/06, F16K 31/00

(54) **Expansion valve**

(30) Priority: 07.06.2013 JP 2013120316
(71) Applicant: Fujikoki Corporation, Tokyo 158-0082 (JP)
(72) Inventor: Inoue, Yasushi, Setagaya-ku, Tokyo 158-0082 (JP); Saito, Takeshi, Setagaya-ku, Tokyo 158-0082 (JP); Murakami, Hayato, Setagaya-ku, Tokyo 158-0082 (JP)
(74) Representative: Schweiger, Martin

(57) **Abstract**

The invention prevents noise caused by a disturbed flow of a high-pressure liquid refrigerant which flows into a valve chamber of an expansion valve. An expansion valve 1 a has an inlet port (20) which is provided in a valve main body (10) and to which a high-pressure liquid refrigerant is supplied. The refrigerant flows into a valve chamber (22) via a small diameter portion (21), passes a valve passage of a valve body (60) and a valve seat (24), and is fed to an evaporator from an orifice (26) and an outlet port (28). A valve body drive device (40) controls a valve opening degree by operating the valve body (60) via a working rod (50). The valve body (60) is supported by an energizing spring (80) via a spring receiver (100). The spring receiver (100) is provided with a cylindrical suspension body (110) which is inserted into an inner portion of the energizing spring (80), and prevents the refrigerant from flowing into the inner portion of the energizing spring (80). A disturbed flow of the refrigerant is prevented by this action and the cause of noise generation is removed.

## Description

### BACKGROUND OF THE INVENTION

### Field of the Invention

The present invention relates to a temperature sensing type expansion valve which is used in a refrigerant cycle.

### Description of the Conventional Art

Conventionally, in a refrigerant cycle used in an air conditioner which is mounted to a motor vehicle, a temperature sensing type temperature expansion valve is used for saving installation space and piping, the temperature expansion valve regulating a passing amount of refrigerant in correspondence to temperature.

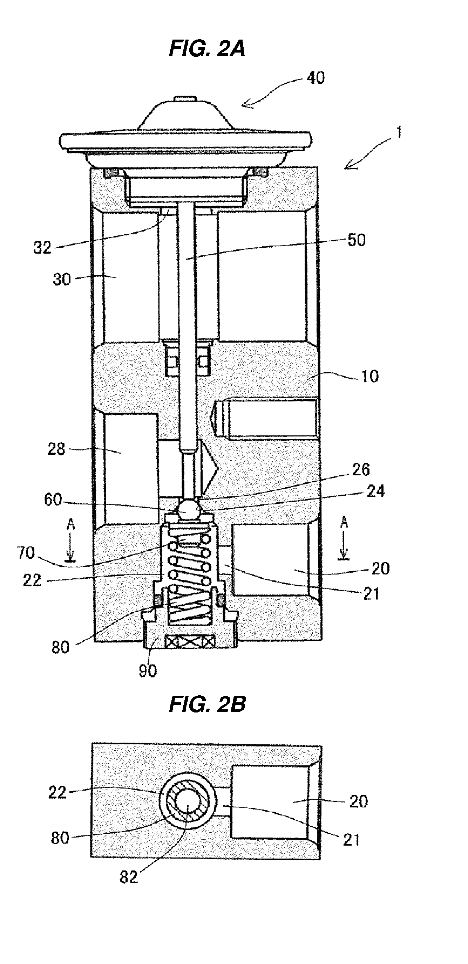

Figs. 2A and 2B show a conventional structure of this kind of expansion valve, in which Fig. 2A is a vertical cross sectional view, and Fig. 2B is a cross sectional view along a line A-A in Fig. 2A.

An expansion valve 1 has a valve main body 10, the valve main body 10 is provided with an inlet port 20 to which a high-pressure refrigerant supplied from a compressor side is introduced, and the inlet port 20 is communicated with a valve chamber 22 via a small diameter portion 21. A valve seat 24 which is opened and closed by a valve body 60 is formed in the inlet port 20, and the refrigerant, which flow rate has been controlled by the valve seat 24 and the valve body 60, is discharged to an evaporator side from an outlet port 28.

The refrigerant returning to a compressor side from the evaporator passes through a return passage 30 which is provided in the valve main body 10. The refrigerant passing through the return passage 30 makes an intrusion into a valve body drive device 40 side via an opening portion 32, and transmits temperature information of the refrigerant to the valve body drive device 40 side.

The valve body drive device 40 has a working pressure chamber in which a working fluid is sealed, and fluctuation of pressure is converted into displacement of a diaphragm so as to be transmitted to a working rod 50.

The working rod 50 controls a valve opening degree by operating the valve body 60. The spherical valve body 60 is supported by a spring receiver 70. The spring receiver 70 is supported by an energizing spring 80 which is provided between the spring receiver 70 and a plug 90 sealing the valve chamber 22. The plug 90 is a nut-like member, and can adjust an energizing force in a valve closing direction of the valve body 60 by adjusting a screwing amount of the plug 90.

This kind of expansion valve is disclosed in the following patent document 1.

### PRIOR ART DOCUMENT

### Patent Document

### Patent Document 1: Japanese Unexamined Patent Publication No. 2012-47393

### SUMMARY OF THE INVENTION

### Problem to be Solved by the Invention

In the conventional expansion valve 1 mentioned above, the high-pressure liquid refrigerant introduced into the valve chamber 22 from the small diameter portion 21 flows into an inside spring internal space 82 through a gap of the energizing spring 80 and disturbed its flow, thereby causing generation of noise.

Accordingly, an object of the present invention is to provide an expansion valve which solves the problem mentioned above.

### Means for Solving the Problem

In order to achieve the object mentioned above, an expansion valve according to the present invention is provided with a valve main body having an inlet port which introduces a high-pressure refrigerant condensed by a condenser, a valve chamber which is communicated with said inlet port, an orifice which is provided in said valve chamber, an outlet port which derives the refrigerant expanding in said orifice toward the outside, and a passage through which the refrigerant returning to the compressor from the evaporator passes, a valve body which opens and closes said orifice, a valve body drive device which drives said valve body so as to control an opening degree of said orifice, and an energizing spring which is arranged within said valve chamber so as to energize said valve body toward said orifice, a spring receiver which is provided between said energizing spring and said valve body is interposed so as to transmit a spring force of said energizing spring to said valve body, the valve spring being interposed so as to transmit a spring force of said energizing spring to said valve body, and said spring receiver is provided with a cylindrical suspension body which closes an internal space of said energizing spring.

### Effect of the Invention

Since the expansion valve according to the present invention is provided with the above structures, the refrigerant does not flow into the internal space of the spring from the gap of the spring, and the noise generated by the disturbed flow can be prevented.

### BRIEF EXPLANATION OF THE DRAWINGS

Figs. 1A and 1B show a preferable embodiment of an expansion valve according to the present invention, in which Fig. 1A is a vertical cross sectional view, and Fig. 1B is a cross sectional view along a line A-A; and

Figs. 2A and 2B show a structure of a conventional expansion valve, in which Fig. 2A is a vertical cross sectional view, and Fig. 2B is a cross sectional view along a line A-A in Fig. 2A.

### DETAILED DESCRIPTION OF PREFERRED EMBODIMENT

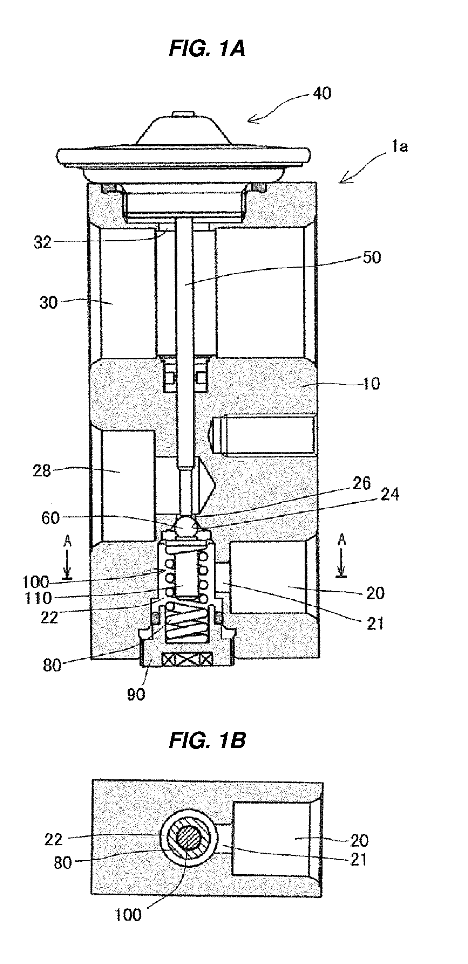

A description will be given of a preferable embodiment of an expansion valve according to the present invention with reference to Fig. 1.

With regard to an expansion valve 1 a according to the prevent invention, a detailed description of the same structure as the expansion valve 1 having the conventional structure described in Fig. 2 will be omitted by attaching the same reference numerals.

The expansion valve 1a according to the present invention has a structure in which a valve body 60 arranged within a valve chamber 22 is supported by an energizing spring 80 via a spring receiver 100.

The spring receiver 100 has a cylindrical suspension body 110, and the suspension body 110 closes a space inside the energizing spring 80. The cylindrical suspension body 110 of the spring receiver 100 at least has a length which extends closer to a plug 90 side than a lower end portion of an opening of a small diameter portion 21. Owing to the existence of the suspension body 110, a high-pressure liquid refrigerant flowing into the valve chamber 22 from the small diameter portion 21 is prevented from flowing into an inner portion of the energizing spring 80, and the flow of the refrigerant is smoothly fed to a valve seat 24 side without being disturbed.

On the basis of this action, the disturbed flow of the high-pressure liquid refrigerant can be prevented from being generated within the valve chamber 22, thereby removing the cause of noise generation.

The expansion valve 1 a according to the present invention can reduce the noise caused by the passage of the refrigerant on the basis of the simple structure, since the expansion valve 1 a is provided with the spring receiver 100 having the cylindrical suspension body 110 inserted into the inner side of the energizing spring, as mentioned above.

## Claims

1. An expansion valve comprising:
a valve main body having an inlet port which introduces a high-pressure refrigerant condensed by a condenser, a valve chamber which is communicated with said inlet port, an orifice which is provided in said valve chamber, an outlet port which derives the refrigerant expanding in said orifice toward the outside, and a passage through which the refrigerant returning to the compressor from the evaporator passes;
a valve body which opens and closes said orifice;
a valve body drive device which drives said valve body so as to control an opening degree of said orifice; and
an energizing spring which is arranged within said valve chamber so as to energize said valve body toward said orifice,
**characterized in that** a spring receiver which is provided between said energizing spring and said valve body is interposed so as to transmit a spring force of said energizing spring to said valve body, the valve spring being interposed so as to transmit a spring force of said energizing spring to said valve body, and
that said spring receiver is provided with a cylindrical suspension body which closes an internal space of said energizing spring.
